# EUROPEAN PATENT APPLICATION

(11) **EP 3 706 200 A1**
(43) Date of publication of application: **09.09.2020**
(21) Application number: 18874033.6
(22) Date of filing: 29.10.2018
(51) Int. Cl.: H01M 2/18, H01M 2/16, H01M 10/12

(54) **LEAD STORAGE BATTERY SEPARATOR AND LEAD STORAGE BATTERY**

(30) Priority: 31.10.2017 JP 2017210468
(71) Applicant: Nippon Sheet Glass Company, Limited, Tokyo 108-6321 (JP); GS Yuasa International Ltd., Kyoto-shi, Kyoto 601-8520 (JP)
(72) Inventor: ONISHI Masaki, Tokyo 108-6321 (JP); KAWACHI Masahiro, Tokyo 108-6321 (JP); WADA Hidetoshi, Kyoto-shi Kyoto 601-8520 (JP); INAGAKI Satoshi, Kyoto-shi Kyoto 601-8520 (JP); KYO Masaaki, Kyoto-shi Kyoto 601-8520 (JP)
(74) Representative: Körfer, Thomas
(86) International application number: PCT/JP2018/040168
(87) International publication number: WO 2019/088040

(57) **Abstract**

[Problem] To provide a separator for a flooded lead acid battery that is optimum for idle stop vehicles.

[Solution] A separator for a flooded lead acid battery, including a porous film containing a polyolefin resin and inorganic powder as major materials, having ribs disposed on both surfaces of the porous film; having a locational relationship of the ribs on the both surfaces that is arbitrarily determined; assuming that one of the both surfaces that has the ribs having a lower average height disposed thereon is a negative electrode side, having linear ribs in a vertical direction provided on the negative electrode side; and on application of a pressure of 10 kPa to flat plates that sandwiched the porous film from both surfaces thereof, having a space of 0.02 mm or more between a back web surface of the negative electrode side and the flat plate.

## Description

### Technical Field

The present invention relates to a separator for a flooded lead acid battery, formed of a porous film existing ribs protruding on both surfaces thereof ribs for abutting an electrode plate, and a flooded lead acid battery using the separator.

### Background Art

A lead acid battery that is widely used as an electric power source for vehicles includes a positive electrode containing lead dioxide supported on a grid of lead or a lead alloy, and a negative electrode containing spongy metallic lead supported thereon. A separator to keep electrical non-conductance by separating the electrode plates is insulated between them, and the assembled in a battery case, to which diluted sulfuric acid is injected as an electrolyte to constitute the battery.

The separator used in a lead acid battery includes a separator containing paper obtained through wet papermaking of linter pulp cured with a phenol resin, to which a glass fiber mat adhered, a separator containing paper obtained through wet papermaking of pulp-like synthetic fibers, inorganic powder, and glass fibers, to which a glass fiber mat adhered, and a porous separator formed of a synthetic resin having ribs, obtained through extrusion molding of a polyolefin resin and inorganic powder.

The separator currently used for a lead acid battery for vehicles is mainly the porous separator formed of a synthetic resin, for example, for such reasons that the edge portions of the separator can be enveloped by a gear seal machine to form a bag, which enables high speed manufacturing of the battery, and protrusions like ribs can be applied in molding process of the resin, which enables the disuse of an expensive glass fiber mat.

Associated with the various technologies for improving fuel efficiency of vehicles in recent years, the lead acid battery for vehicles is demanded to perform frequent large electrical current discharge to supply electricity at idle stop state and at restarting the engine. Accordingly, the important characteristics of the lead acid battery for vehicles using the porous separator formed of a synthetic resin are to retain the discharge current for restarting the engine by accepting the regenerative charge energy in a larger amount within a shorter period.

By repeating charge and discharge of the lead acid battery, water is formed in discharging, and concentrated sulfuric acid is formed in charging. The concentrated sulfuric acid tends to settle to the lower part due to the higher specific gravity than water, which may cause the phenomenon called acid stratification, in which the concentration of the electrolyte (sulfuric acid) is differentiated between the upper part and the lower part. In an engine vehicle that does not have an idle stop and start system, the battery is overcharged in a driving, and the stratification is relieved through the agitation effect of the electrolyte with oxygen and hydrogen gases formed from the positive and negative electrode plates. On the other hand, under the control of the partial state of charge (PSOC), acid stratification is prone to occur because the charging time is extremely short since the battery is only charged during deceleration, resulting in the continuous insufficient charge state, and thus the agitation effect of the electrolyte does not occur due to the limitation of with oxygen and hydrogen gases. The occurrence of the acid stratification tends to cause penetration short circuit in the upper part of the battery cell because of a decreased sulfuric acid concentration.

Furthermore, the lead acid battery for idle start stop vehicles accepts a larger amount of regenerative charge energy within a shorter period, and therefore is required excellent in the battery capacity and high charge acceptability. As a measure for enhancing these properties, it is the general practice that the amounts of the active material of the positive and negative electrodes are increased, but the increase of the active material relatively decreases the amount of the electrolyte corresponding thereto, which tends to decrease the sulfuric acid concentration in discharging. Accordingly, the increase of the amount of the active material may also be a factor causing the penetration short circuit.

As described above, the lead acid battery for idle stop vehicles has a problem that penetration short circuit tends to occur, as compared to a battery for vehicles that do not have an idle stop and start system, because of the factor of design (i.e., the large amount of the active material with respect to the electrolyte) and the factor in use (i.e., the stratification tends to occur), both of which are commonly attributable to the decrease of the sulfuric acid concentration in the electrolyte.

For example, PTL 1 describes that in the case where the flat surface of the porous film separator formed of a synthetic resin is in contact with the negative electrode, dendrite grows from the flat surface side (negative electrode side) toward the top surface of the ribs on the positive electrode side, so as to cause penetration short circuit, which is considered as the influence of the decrease of the sulfuric acid concentration in discharging.

A lead acid battery, even though the lead acid battery is for idle stop vehicles, is sometimes used temporarily used under a high temperature and overcharged condition, for example, in summer season. In this case, such a phenomenon occurs that a reductive substance released and formed from the separator is changed to an organic acid (for example, a volatile organic acid, such as acetic acid) that cases lead dissolution, by the oxidation inside the battery. The organic acid causes corrosion inside the lead acid battery to decrease the reactive area inside of the cell, which causes difficulty to take a large current at the time of the engine starting required large current discharge, and a risk of decrease in lifetime.

Accordingly, the separator for a flooded lead acid battery is also demanded to prevent the corrosion inside the lead acid battery, supplying the large current discharge at the time of the engine starting from idle stop state, even under the high temperature and overcharged condition.

PTL 2 describes that a separator for a lead acid battery that prevents the corrosion inside the lead acid battery used under the high temperature and overcharged state can be provided by reducing the amount of the reductive substance released and eluted from the porous film separator formed of a synthetic resin.

### Citation List

### Patent Literatures

PTL 1: JP-A-2013-211115
PTL 2: JP-A-2005-243585
PTL 3: JP-A-2013-508917
PTL 4: JP-A-2017-33660
PTL 5: JP-A-2015-216125
PTL 6: JP-A-1-267965
PTL 7: JP-A-10-31991

### Summary of Invention

### Technical Problem

As described above, a separator for a lead acid battery for idle stop vehicles is required to achieve the prevention of the penetration short circuit and the prevention of corrosion inside the lead acid battery, and various attempts have been made particularly for the prevention of the penetration short circuit. However, the prevention of the penetration short circuit includes the case where the special rib shape (horizontal ribs) is necessarily provided on the negative electrode side of the separator and the case where the locational relationship between the ribs on the negative electrode side and the positive electrode side is necessarily regulated, which may cause problems in the production of the separator decreasing the yield and the production speed in the production of the separator.

For example, as the special rib structure, PTL 3 describes that ribs in the horizontal direction formed on the negative electrode side are effective as the separator for a flooded lead acid battery preventing the penetration short circuit. However, the formation of the ribs in the horizontal direction tends to cause the decrease of the yield and the productivity including the occurrence of unevenness in running of the resin, as compared to the formation of ribs in the vertical direction. Accordingly, the directions of the ribs formed on both surfaces of the separator are mainly the vertical direction, except for the special purposes.

PTLs 4 and 5 describe that the locational relationship between the ribs formed on the negative electrode side and the ribs formed on the positive electrode side is effective for preventing the penetration short circuit. However, the fixation of the locational relationship between the ribs on both surfaces tends to cause the decrease of the production speed due to the decrease of the rotation speed of the high speed rotating molding rolls of the front and back surfaces regulating the locations of both side ribs, and the decrease of the yield caused by unexpected misalignment of the locational relationship of the ribs on both surfaces, which may cause increase of the production cost.

An object of the invention is to provide a separator for a flooded lead acid battery optimized for idle stop vehicles, that is capable of preventing the penetration short circuit even used in an environment where the flooded lead acid battery tends to be in an overcharged state, and is capable of prevention the corrosion inside the lead acid battery even in the use under a high temperature and overcharged state, while the separator can be conveniently produced since the ribs formed on both surfaces of the separator are vertical ribs which are easily formed, and the locational relationship between the ribs on the negative electrode side and the positive electrode side is not necessarily regulated.

### Solution to Problem

In the separator for a lead acid battery of the invention, a distance is provided between the back web surface of the negative electrode side of the separator inside the lead acid battery and the negative electrode of the lead acid battery even in discharging the lead acid battery having the separator receiving pressure, thereby securing a space constantly in which the electrolyte containing sulfuric acid exist on the negative electrode side of the lead acid battery, and sulfuric acid is supplied from the electrolyte filled in the space to the negative electrode of the lead acid battery without through the separator.

The supply of sulfuric acid to the negative electrode of the lead acid battery without through the separator can suppress the decrease of the sulfuric acid concentration in the electrolyte in contact with the negative electrode, and thus can prevent the excessive elution of lead sulfate, which is a substance formed through discharge causing dendrite. PTL 6 describes the relationship between the sulfuric acid concentration and the solubility of lead oxide, and describes that the solubility of lead sulfate is extremely increased when the sulfuric acid concentration is decreased to change the acidity to neutrality.

The prevention of the excessive elution of lead sulfate can prevent the generation source of dendrite causing the penetration short circuit, thereby preventing the penetration short circuit in over discharging.

The separator for a lead acid battery of the invention has been completed based on the aforementioned concept, and comprising a porous film containing a polyolefin resin and inorganic powder as major materials, having ribs disposed on both surfaces of the porous film; having a locational relationship of the ribs on the both surfaces that is arbitrarily determined; assuming that one of the both surfaces that has the ribs having a lower average height disposed thereon is facing a negative electrode side, having linear ribs in a vertical direction provided on the negative electrode side; and on application of a pressure of 10 kPa to flat plates that sandwiched the porous film from both surfaces thereof, having a space of 0.02 mm or more between a back web surface of the negative electrode side and the flat plate surface.

In the separator for a lead acid battery of the invention, the length of a root of linear ribs on the negative electrode side may have 67% or less with respect to a length of only the back web surface between the linear ribs on the negative electrode side, and the pitch of linear ribs on the negative electrode side have 2 mm or less.

The aforementioned constitution can secure the space filled with the electrolyte for constantly supplying sulfuric acid to the negative electrode of the lead acid battery.

In the separator for a lead acid battery of the invention, assuming that one of the both surfaces that is opposite to the negative electrode side is a positive electrode side, the separator may have linear ribs in a vertical direction provided on the positive electrode side, and the linear ribs on the positive electrode side may have a height of 0.26 mm or more. The constitution can secure sulfuric acid that is reacted with the electrode on the positive electrode side inside the lead acid battery, and thereby the capacity thereof can be prevented from being decreased even when a part of sulfuric acid is allocated to the negative electrode side.

In the separator for a lead acid battery of the invention, the linear ribs on the negative electrode side may have a height of 0.04 mm or more. The constitution can secure the space filled with the electrolyte for constantly supplying sulfuric acid to the negative electrode of the lead acid battery.

In the separator for a lead acid battery of the invention, 25% or more of the linear ribs on the positive electrode side may have the linear ribs on the negative electrode side located directly behind the linear ribs on the positive electrode side at the negative electrode side. By providing the linear ribs formed on the negative electrode side at locations on the negative electrode side that are right behind 25% or more of the linear ribs on the positive electrode side, the space filled with the electrolyte for constantly supplying sulfuric acid to the negative electrode of the lead acid battery can be secured even when a pressure of 10 kPa is applied.

In the separator for a lead acid battery of the invention, furthermore, the back web thickness except for a height of the ribs on the porous film has 0.15 mm or more and 0.25 mm or less, and the overall thickness including the ribs on the both 1.0 mm or less. For example, the separator of the type described in PTL 7 preferably has a back web thickness of 0.25 mm or less.

In the separator for a lead acid battery of the invention, the amount of any reductive substance originating from the surface active agent and liberated or eluted from the porous membrane as the separator into diluted sulfuric acid after 24 hours of electrolysis carried out at about 25°C with a direct current of 1.2 A by using an electrolytic cell composed of the porous membrane as the separator, a positive electrode, a negative electrode and the diluted sulfuric acid is 1.6 ml or less per 100 cm² when calculated from the consumption by titration of a 0.01N potassium permanganate solution per 100 cm² of the porous membrane. The satisfaction of the aforementioned value can prevent corrosion inside the lead acid battery even when the lead acid battery is used under a high temperature and overcharged state.

### Advantageous Effects of Invention

The satisfaction of the aforementioned characteristics can provide a separator for a flooded lead acid battery that is optimum for idle stop vehicles.

### Brief Description of Drawings

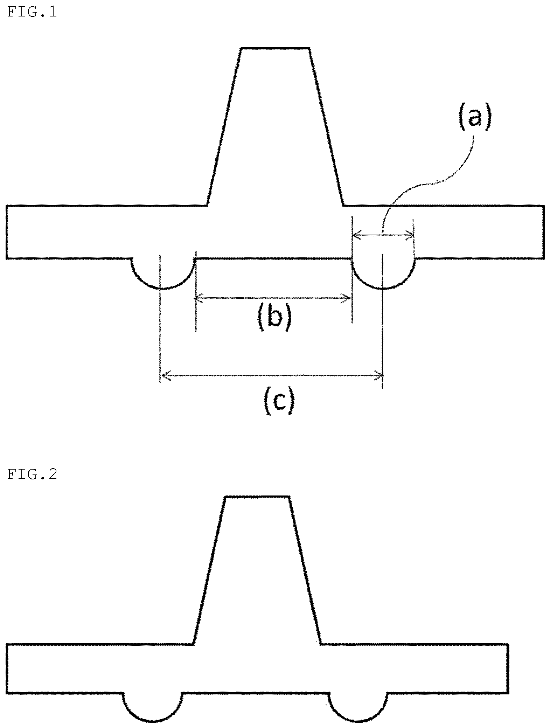

Fig. 1 is a cross sectional view of the separator in the invention.
Fig. 2 is an explanatory view of the case where the vertical rib on the negative electrode side is deviated from the location right behind the vertical rib on the positive electrode side of the separator in the invention.
Fig. 3 is an explanatory view of the case where the vertical rib on the negative electrode side is located right behind the vertical rib on the positive electrode side of the separator in the invention.
Fig. 4 is an explanatory view of a lead acid battery in the invention.

### Description of Embodiments

Embodiments of the separator for a lead acid battery of the invention are described below, but the separator for a lead acid battery of the invention is not limited to the embodiments .

In the separator for a lead acid battery of the invention, the porous film contains a polyolefin resin and inorganic powder as major materials. The porous film has ribs disposed on both surfaces of the film. The locational relationship of the ribs on the both surfaces is arbitrarily determined. One of the both surfaces that has the ribs having a lower average height disposed thereon is designated as a negative electrode side, and the other surface is designated as a positive electrode side.

On application of a pressure of 10 kPa to flat plates that sandwiched the porous film from both surfaces thereof, the separator has a space of 0.02 mm or more between the back web surface of the negative electrode side (i.e., the back web of the negative electrode side) and the flat plate, with the linear ribs in the vertical direction (i.e., the vertical ribs) provided on the negative electrode side of the porous film. Accordingly, the separator secures the space for the electrolyte containing sulfuric acid existing therein, by providing a distance of 0.02 mm or more from the negative electrode plate of the lead acid battery (i.e., the negative electrode plate) even on application of a pressure of 10 kPa with flat plates.

The pressure of 10 kPa with flat plates is determined since the active material inside the negative electrode is expanded through discharge of the lead acid battery, and the separator is exposed to a pressurized environment. Even in the case where the separator is pressurized through over discharge of the lead acid battery, the space does not collapse by the application of pressure, and the space for the electrolyte existing therein is constantly secured with the ribs formed on the negative electrode side, which is the effective measure for supplying sulfuric acid to the negative electrode, and preventing the excessive elution of lead sulfate, which may be the generation source of dendrite causing the penetration short circuit.

The literatures show that ribs formed on the negative electrode side is effective for the prevention of the dendrite short circuit, but ribs that are only simply formed on the negative electrode side are not necessarily effective. For example, PTL 5 describes vertical ribs on the negative electrode side effective for the prevention of the dendrite short circuit, but there is the restriction in the locational relationship between the vertical ribs on the positive electrode side and the vertical ribs on the negative electrode side. The literature describes that the locational relationship where the vertical ribs on the negative electrode side do not overlap the locations right behind the vertical ribs on the positive electrode side, which prolongs the short circuit pathway of the dendrite short circuit, is the effective measure against the dendrite short circuit. In this constitution, however, in the case where there is only at least one location where the vertical rib on the negative electrode side is located directly behind the vertical rib on the positive electrode side, short circuit occurs through dendrite at that location, and the effect of the vertical ribs on the negative electrode side is lost.

There are cases where the locations and the shape of the vertical ribs on the negative electrode side are to be changed in relation to the other characteristics, however, the literature does not show any guideline for designing in the case where the vertical ribs on the negative electrode side are necessarily located directly behind a part of the vertical ribs on the positive electrode side.

Accordingly, the design of the constitution that prevents the dendrite short circuit and simultaneously satisfies the other characteristics has not yet been known. The invention enables the design of the separator having the vertical ribs on the negative electrode side capable of achieving also the other characteristics, by focusing the elution of lead sulfate becoming dendrite (i.e., the measure against the generation source) irrespective of the short circuit pathway (i.e., the growth process) of dendrite. As for the suppression of the elution of lead sulfate, it is important that the space for supplying sulfuric acid to the negative electrode is secured to the prescribed extent or more.

For securing the space for supplying sulfuric acid to the negative electrode, it is not sufficient that only a certain height is simply provided to the vertical ribs on the negative electrode side. The spatial distance on the negative electrode side is changed through warpage of the separator under application of pressure, and the height of the vertical ribs on the negative electrode side is changed under application of pressure, depending on the shape and the number of the ribs formed on the negative electrode side. Accordingly, it is important that the spatial distance on application of a pressure of 10 kPa is secured to be the prescribed value or more, but not the locations and the shape of the vertical ribs on the negative electrode side under no application of pressure.

The distance between the back web of the negative electrode side and the negative electrode plate is 0.02 mm or more on application of a pressure of 10 kPa since with a distance of less than 0.02 mm, the total amount of the electrolyte in contact with the negative electrode plate is decreased to decrease the sulfate ion concentration in over discharging, and thereby the solubility of lead sulfate is increased. Accordingly, the elution amount of lead sulfate causing the dendrite short circuit is increased to promote the occurrence of the penetration short circuit. The distance between the back web of the negative electrode side and the negative electrode plate is secured to be 0.02 mm or more, and thereby the decrease of the sulfate ion concentration in over discharging can be suppressed to provide the effect of effectively preventing the occurrence of the penetration short circuit. For further enhancing the effect of preventing the penetration short circuit, the distance between the back web of the negative electrode side and the negative electrode plate on application of a pressure of 10 kPa is preferably 0.03 mm or more, and for still further enhancing the effect, the distance between the back web of the negative electrode side and the negative electrode plate on application of a pressure of 10 kPa is preferably 0.04 mm or more.

In the case where the area occupied by the vertical ribs formed to secure the distance between the back web of the negative electrode side and the negative electrode plate becomes too large, the space for securing the electrolyte may not be sufficiently utilized. Furthermore, the increase of the area occupied by the vertical ribs on the negative electrode side is equivalent to the increase of the thickness of the back web, which increases the internal resistance of the battery. Accordingly, on the back web of the negative electrode side, the length (a) of the root of the linear ribs is preferably 67% or less, more preferably 50% or less, and further preferably 30% or less, with respect to the length (b) of only the back web surface between the linear ribs.

Furthermore, on the back web of the negative electrode side, the linear ribs may have a pitch (c) of 2 mm or less since with a pitch exceeding 2 mm, it may be difficult to secure the space between the back web of the negative electrode side and the flat plate on application of a pressure of 10 kPa with flat plates, so as to decrease the effect of preventing the penetration short circuit. Accordingly, the pitch (c) among the linear ribs on the back web of the negative electrode side is preferably 2 mm or less.

The ribs on the back web of the negative electrode side are for providing a distance between the back web surface of the separator and the electrode, so as to secure the space filled with the electrolyte, and are not limited to a particular rib shape, and linear ribs in the vertical direction are preferred in consideration of the processability in the formation of ribs on the separator.

The cross sectional shape of the linear ribs in the vertical direction may be arbitrarily selected from a semicircular shape, a trapezoidal shape, and the like.

Assuming that one of the both surfaces of the porous film that has the ribs having a larger average height disposed thereon is the positive electrode side, the rib height on the positive electrode side is preferably 0.26 mm or more, more preferably 0.31 mm or more, and further preferably 0.36 mm or more. In the case where the rib height on the positive electrode side is lowered, the sulfuric acid concentration of the electrolyte in contact with the positive electrode is decreased, which makes the securement of the battery capacity difficult. The reaction between the positive electrode and sulfuric acid forms water in addition to lead sulfate, as being different from the negative electrode, and therefore sulfuric acid on the positive electrode side tends to be diluted in over discharging. This is the reason why the distance between the back web surface and the positive electrode side is necessarily secured to be equal to or larger than the distance between the back web surface and the negative electrode side.

For achieving the quick charge and discharge demanded for the lead acid battery for idle stop vehicles, the positive electrode side necessarily has a rib height that is equal to or larger than the negative electrode side.

The vertical ribs on the negative electrode side preferably have a height of 0.04 mm or more. The height thereof of 0.04 mm or more can secure a distance of 0.02 mm or more between the negative electrode plate and the back web of the negative electrode side even under application of a pressure of 10 kPa. The height of the vertical ribs is more preferably 0.06 mm or more, and further preferably 0.09 mm or more.

With a larger height of the vertical ribs on the negative electrode side, a distance of 0.02 mm or more can be more readily secured between the negative electrode plate and the back web of the negative electrode side even in the case where the proportion of the vertical ribs on the positive electrode side in which the ribs on the negative electrode side that are located directly behind the vertical ribs on the positive electrode side described later is small. However, in the case where the vertical ribs on the negative electrode side are excessively high, the height of the vertical ribs on the positive electrode side becomes relatively small to decrease the battery capacity. Accordingly, the height of the vertical ribs on the negative electrode side is preferably 0.2 mm or less, more preferably 0.19 mm or less, further preferably 0.15 mm or less, and still further preferably 0.10 mm or less.

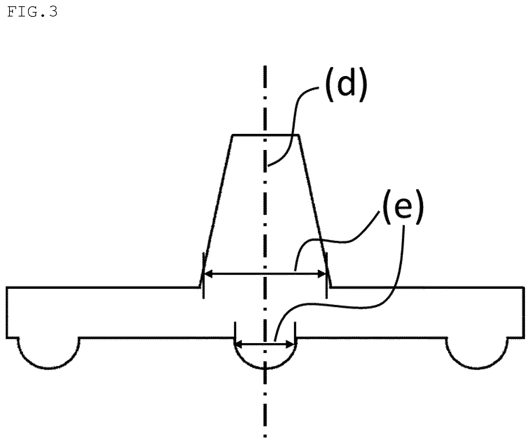

The vertical ribs on the negative electrode side are preferably located directly behind the vertical ribs on the positive electrode side in a proportion of 25% or more, and more preferably 50% or more, of the total vertical ribs on the positive electrode side. The locating directly behind means the locational relationship where the 1/10 height portion (e) of the vertical ribs on the positive electrode side and the 1/10 height portion (e) of the vertical ribs on the negative electrode side overlap each other (see Fig. 3). The 1/10 height portions (e) of the vertical ribs on the positive electrode side and the negative electrode side each mean the width (i.e., the length in the width direction) of the vertical rib at the 1/10 height (10% height) location of the rib height, which is defined by the back web surface and the top of the vertical rib on the transverse cross sectional surface of the vertical rib. As described above, the excessive elution of lead sulfate as the generation source of the penetration short circuit is prevented by constantly securing the space for the electrolyte existing therein with the ribs on the negative electrode side, and therefore the prevention effect of the penetration short circuit can be obtained irrespective of the growth pathway of dendrite described in PTL 1. Due to the unnecessity of the regulation of the locations of the vertical ribs on the negative electrode side with respect to the locations of the vertical ribs on the positive electrode side, the high speed rotating molding rolls for the positive and negative electrode sides may substantially not necessarily regulated in location in the formation of the ribs on the negative electrode side and the positive electrode side, and thereby the productivity of the separator can be enhanced.

The porous film may have a back web thickness of 0.15 mm or more and 0.25 mm or less. In the case where the back web thickness is too large, the internal resistance of the lead acid battery may be increased, which is not preferred for the lead acid battery for idle stop vehicles. On the other hand, the back web thickness that is smaller than 0.15 mm is not preferred since the strength of the separator may be lowered, which may cause breakage of the separator under application of vibration.

The amount of any reductive substance originating from the surface active agent and liberated or eluted from the porous membrane as the separator into diluted sulfuric acid after 24 hours of electrolysis carried out at about 25±2°C with a direct current of 1.2 A by using an electrolytic cell composed of the porous membrane as the separator, a positive electrode, a negative electrode and the diluted sulfuric acid is 1.6 ml or less per 100 cm² when calculated from the consumption by titration of a 0.01N potassium permanganate solution per 100 cm² of the porous membrane. This can prevent the corrosion inside the lead acid battery used under a high temperature and overcharged state.

Embodiments of a lead acid battery using the separator for a lead acid battery of the invention are described below, but the lead acid battery of the invention is not limited to the embodiments.

### (Electrolyte)

The electrolyte may be an aqueous solution containing sulfuric acid. The electrolyte may be gelled depending on necessity. The electrolyte may contain additives that have been used in lead acid batteries depending on necessity.

The specific gravity of the electrolyte at 20°C in a lead acid battery in a fully charged state after chemical conversion may be, for example, 1.10 g/cm³ or more and 1.35 g/cm³ or less.

### (Positive electrode plate)

A positive electrode plate of a lead acid battery includes a paste type and a clad type.

The paste type positive electrode plate has a positive electrode collector and a positive electrode material. The positive electrode material is held with the positive electrode collector. In the paste type positive electrode plate, the positive electrode material is a material that is except for the positive electrode collector from the positive electrode plate. The positive electrode collector may be formed in the same manner as the negative electrode collector, and may be formed by casting lead or a lead alloy or processing a lead or lead alloy sheet.

The clad type positive electrode plate has plural porous tubes, core metals inserted to the tubes, a positive electrode material filled in the tubes having the core metals inserted thereto, and a connecting pedestal connecting the plural tubes. In the clad type positive electrode plate, the positive electrode material is a material that is except for the tubes, the core metals, and the connecting pedestal from the positive electrode plate.

The lead alloy used as the positive electrode collector is preferably a Pb-Ca based alloy or a Pb-Ca-Sn based alloy from the standpoint of the corrosion resistance and the mechanical strength. The positive electrode collector may have a lead alloy layer having a different composition, and plural alloy layers may be used. The core metal used is preferably a Pb-Ca based alloy or a Pb-Sb based alloy.

The positive electrode material contains a positive electrode active material that exhibits a capacity through redox reaction (such as lead dioxide or lead sulfate). The positive electrode material may contain other additives depending on necessity.

The paste type positive electrode plate before chemical conversion may be obtained by filling the positive electrode paste in the positive electrode collector, and aged and dried, in the similar manner as the negative electrode plate. Thereafter, the positive electrode plate before chemical conversion is subjected to chemical conversion. The positive electrode paste may be prepared by kneading lead powder, additives, water, and sulfuric acid.

The clad type positive electrode plate may be formed by filling lead powder or lead powder in the form of slurry to the tubes having the core metals inserted thereto, and the plural tubes are connected with the connecting pedestal.

### (Negative electrode plate)

The negative electrode plate of the lead acid battery is constituted by a negative electrode collector and a negative electrode material. The negative electrode material is a material that is except for the negative electrode collector from the negative electrode plate. The negative electrode collector may be formed by casting lead (Pb) or a lead alloy, and may be formed by processing a lead or lead alloy sheet. Examples of the processing method include an expansion process and a punching process. A negative electrode grid is preferably used as the negative electrode collector since the negative electrode material can be readily supported thereon.

The lead alloy used in the negative electrode collector may be any of a Pb-Sb based alloy, a Pb-Ca based alloy, and a Pb-Ca-Sn based alloy. These lead and lead alloys may contain at least one kind selected from the group consisting of Ba, Ag, Al, Bi, As, Se, Cu, and the like as an additive element.

The negative electrode material contains a negative electrode active material that exhibits a capacity through redox reaction (such as lead or lead sulfate), may contain anti-shrinking agent, a carbonaceous material, such as carbon black, and barium sulfate, and may contain other additives depending on necessity.

The negative electrode active material in charged state is sponge lead, and the negative electrode plate before chemical conversion is generally produced by using lead powder.

The negative electrode plate may be formed in such a manner that a negative electrode plate before chemical conversion is produced by filling a negative electrode paste in the negative electrode collector, and aged and dried, and then the negative electrode plate before chemical conversion is subjected to chemical conversion. The negative electrode paste may be produced by kneading lead powder, an organic anti-shrinking agent, and depending on necessity, various additive, to which water and sulfuric acid are added. In the aging process, the negative electrode plate before chemical conversion is preferably aged at a higher temperature than room temperature and a high humidity.

The chemical conversion may be performed in such a manner that the electrode plate group including the negative electrode plates before chemical conversion is immersed in an electrolyte containing sulfuric acid in a battery case of a lead acid battery, and in this state, the electrode plate group is charged. The chemical conversion may be performed before the assemblage of the lead acid battery or the electrode plate group. Sponge lead is formed through the chemical conversion.

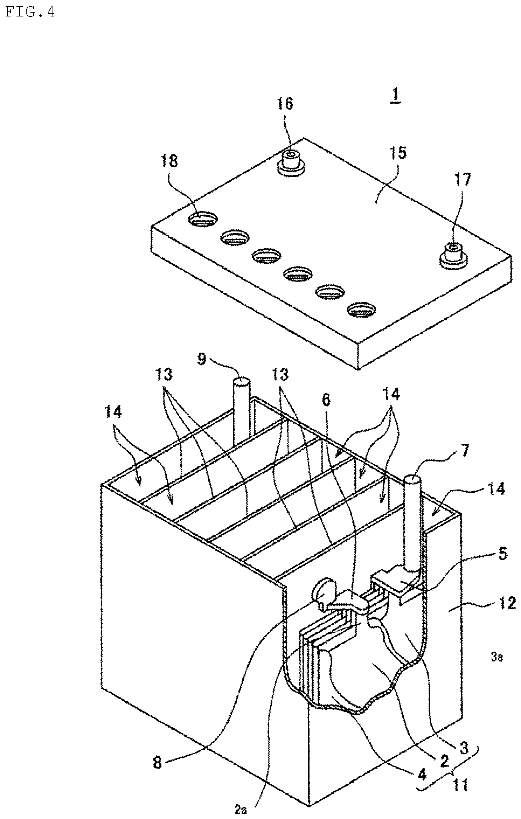

Fig. 4 shows an appearance of one example of the lead acid battery according to the embodiment of the invention.

A lead acid battery 1 has a battery case 12 that houses electrode plate groups 11 and an electrolyte (which is not shown in the figure). The interior of the battery case 12 is partitioned into plural cells 14 with partition walls 13. The cells 14 each house one of the electrode plate groups 11 respectively. The opening of the battery case 12 is closed with a lid 15 that has a negative terminal 16 and a positive terminal 17. The lid 15 has vent plugs 18 for the cells 14 respectively. In the replenishment of a solution, the vent plug 18 is detached, and a replenishment solution is replenished. The vent plug 18 may also have a function exhausting gas generated in the cell 14 outside the battery.

The electrode plate groups 11 each are constituted by stacking plural sheets of negative electrode plates 2 and positive electrode plates 3 via separators 4. The separator 4 shown herein is in the form of a bag housing the negative electrode plates 2, but the form of the separator is not particularly limited. In the cell 14 that is positioned at one end of the battery case 12, a negative electrode platform 6 that connects the plural negative electrodes 2 in parallel to each other is connected to a penetrating connecting member 8, and a positive electrode platform 5 that connects the plural positive electrodes 3 in parallel to each other is connected to a positive electrode column 7. The positive electrode column 7 is connected to the positive terminal 17 outside the lid 15. In the cell 14 that is positioned at the other end of the battery case 12, a negative electrode platform 6 is connected to a negative electrode column 9, and a positive electrode platform 5 is connected to a penetrating connecting member 8. The negative electrode column 9 is connected to the negative terminal 16 outside the lid 15. The penetrating connecting members 8 each connect in series the electrode plate groups 11 in the cells 14 adjacent to each other, through a through hole provided in the partition wall 13.

### Examples

The invention will be described specifically with reference to examples and comparative examples below, but the invention is not limited to the examples below.

### (Example 1)

### (1) Production of Negative electrode plate

Lead powder, water, diluted sulfuric acid, carbon black, and an organic anti-shrinking agent were mixed to provide a negative electrode paste. The negative electrode paste was filled in a mesh portion of an expansion grid formed of a Pb-Ca-Sn based alloy as a negative electrode collector, and aged and dried to provide a negative electrode plate before chemical conversion. The organic anti-shrinking agent used was sodium lignin sulfonate. The carbon black and the organic anti-shrinking agent added each were mixed in the negative electrode paste in such a manner that the amounts thereof added each were regulated to provide the content thereof of 0.2% by mass in 100% by mass of the negative electrode material.

### (2) Production of Positive electrode plate

Lead powder, water, and sulfuric acid were kneaded to produce a positive electrode paste. The positive electrode paste was filled in a mesh portion of an expansion grid formed of a Pb-Ca-Sn based alloy as a positive electrode collector, and aged and dried to provide a positive electrode plate before chemical conversion.

### (3) Production of Separator

40 parts by mass of ultrahigh molecular weight polyethylene resin powder having a weight average molecular weight of 5,000,000 (melting point: 135°C), 60 parts by mass of silica fine powder having a specific surface area by the BET method of 200 m²/g, 120 parts by mass of a paraffin mineral oil, and a surfactant were mixed. The resulting raw material composition was extruded into a sheet form while melt-kneading with a twin screw extruder having a T-die attached to the head thereof, and the sheet was passed between one pair of rolls each having prescribed grooves for forming ribs, so as to provide a film material including a flat sheet having ribs with a prescribed shape molded integrally thereto. At this time, the locational relationship of grooves between the molding roll on the positive electrode side and the molding roll on the negative electrode side was not regulated.

Subsequently, the film material was immersed in n-hexane to extract and remove the paraffin mineral oil, and dried to make porous. The porous film material was heated to approximately from 70 to 80°C by placing into a furnace of approximately 110°C, and pressed in the thickness direction by passing between one pair of rolls having a prescribed roll gap distance, so as to compress the ribs, thereby regulating the overall thickness. According to the procedures, a porous film separator with ribs on both surfaces (i.e., a separator for a flooded lead acid battery) constituted by 34% by mass of the polyethylene resin, 51% by mass of the silica fine powder, and 15% by mass of the paraffin mineral oil, having a back web thickness of 0.25 mm and an overall thickness of 0.70 mm was obtained.

The ribs on the positive electrode side were plural linear ribs in parallel to the MD (machine direction) having a rib pitch distance (i.e., a distance between the centers of two ribs adjacent to each other) of 10 mm. The transverse cross sectional surface (i.e., the cross section obtained by cutting the rib in the direction perpendicular to the MD) of the rib was an approximately bilaterally symmetric approximately trapezoidal shape having a rib height of 0.36 mm, a top rib width of 0.4 mm, and a bottom rib width of 0.8 mm, and the top surface (i.e., the upper surface) of the rib was an approximately flat surface in approximately parallel to the back web surface.

The ribs on the negative electrode side were plural linear ribs in parallel to the MD (machine direction) . On the transverse cross sectional surface (i.e., the cross section obtained by cutting the rib in the direction perpendicular to the MD) of the ribs, the ribs were bilaterally symmetric semicircular ribs having a pitch between the linear ribs (i.e., a distance between the centers of two ribs adjacent to each other) of 1 mm, a length of the root of the linear rib of 25% with respect to the length of only the back web surface between the linear ribs, and a rib height of 0.09 mm. The proportion of the ribs on the positive electrode side in which the ribs on the negative electrode side that were located directly behind the ribs on the positive electrode side was 50%.

The amount of the surfactant was regulated in such a manner that the amount of the reductive substance was 0.2 mL/100 cm² in terms of the converted value as the consumed amount of an N/100 potassium permanganate solution per one sheet of the porous film of 100 cm².

### (4) Production of Lead Acid Battery

The negative electrode plates before chemical conversion were housed in the separator in the form of a bag produced with the fine porous film formed of polyethylene, so as to constitute an electrode group by 7 sheets of the negative electrode plates before chemical conversion and 6 sheets of the positive electrode plates before chemical conversion per one cell.

The electrode group was inserted in a battery case formed of polypropylene, to which an electrolyte was charged, and chemical conversion was performed in the battery case. The specific gravity of the electrolyte at 20°C after the chemical conversion was 1.28 g/cm³, and sodium sulfate (Na₂SO₄) was added as an additive for the electrolyte to make an Na content of 0.1 mol/L. A flooded lead acid battery having a nominal voltage of 12 V and a nominal capacity of 32 Ah (5-hour time rate) was thus fabricated.

### (Example 2)

A lead acid battery was produced in the same manner as in Example 1 except that in the separator with ribs on both surfaces in Example 1, the back web thickness was 0.20 mm and the rib height on the positive electrode side was 0.41 mm. The proportion of the ribs on the positive electrode side in which the ribs on the negative electrode side that were located directly behind the ribs on the positive electrode side was 37.5%.

### (Example 3)

A lead acid battery was produced in the same manner as in Example 1 except that in the separator with ribs on both surfaces in Example 1, the back web thickness was 0.20 mm, the rib height on the negative electrode side was 0.19 mm, and the rib height on the positive electrode side was 0.31 mm. The proportion of the ribs on the positive electrode side in which the ribs on the negative electrode side that were located directly behind the ribs on the positive electrode side was 50%.

### (Example 4)

A lead acid battery was produced in the same manner as in Example 1 except that in the separator with ribs on both surfaces in Example 1, the rib height on the negative electrode side was 0.19 mm, and the rib height on the positive electrode side was 0.26 mm. The proportion of the ribs on the positive electrode side in which the ribs on the negative electrode side that were located directly behind the ribs on the positive electrode side was 37.5%.

### (Example 5)

A lead acid battery was produced in the same manner as in Example 1 except that in the separator with ribs on both surfaces in Example 1, the rib height on the negative electrode side was 0.04 mm, the rib height on the positive electrode side was 0.41 mm, and the length of the root of the ribs on the negative electrode side was 30% with respect to the length of only the back web surface. The proportion of the ribs on the positive electrode side in which the ribs on the negative electrode side that were located directly behind the ribs on the positive electrode side was 50%.

### (Example 6)

A lead acid battery was produced in the same manner as in Example 1 except that in the separator with ribs on both surfaces in Example 1, the length of the root of the ribs on the negative electrode side was 50% with respect to the length of only the back web surface. The proportion of the ribs on the positive electrode side in which the ribs on the negative electrode side that were located directly behind the ribs on the positive electrode side was 62.5%.

### (Example 7)

A lead acid battery was produced in the same manner as in Example 1 except that in the separator with ribs on both surfaces in Example 1, the length of the root of the ribs on the negative electrode side was 67% with respect to the length of only the back web surface. The proportion of the ribs on the positive electrode side in which the ribs on the negative electrode side that were located directly behind the ribs on the positive electrode side was 62.5%.

### (Example 8)

A lead acid battery was produced in the same manner as in Example 1 except that in the separator with ribs on both surfaces in Example 1, the length of the root of the ribs on the negative electrode side was 11% with respect to the length of only the back web surface, and the pitch between the ribs on the negative electrode side was 2 mm. The proportion of the ribs on the positive electrode side in which the ribs on the negative electrode side that were located directly behind the ribs on the positive electrode side was 37.5%.

### (Example 9)

A lead acid battery was produced in the same manner as in Example 8. The proportion of the ribs on the positive electrode side in which the ribs on the negative electrode side that were located directly behind the ribs on the positive electrode side was 25%.

### (Example 10)

A lead acid battery was produced in the same manner as in Example 1 except that in the separator with ribs on both surfaces in Example 1, at the time of providing the film material by molding the ribs having the prescribed shape integrally with the flat sheet by passing between the molding rolls, the locational relationship of the grooves between the molding roll on the positive electrode side and the molding roll on the negative electrode side was regulated to provide a structure in which the ribs on the negative electrode side were located directly behind the ribs on the positive electrode side as much as possible. The proportion of the ribs on the positive electrode side in which the ribs on the negative electrode side that were located directly behind the ribs on the positive electrode side was 87.5%.

### (Example 11)

A lead acid battery was produced in the same manner as in Example 1 except that in the separator with ribs on both surfaces in Example 1, the amount of the surfactant mixed was increased to provide an amount of the reductive substance of 1.6 mL/100 cm². The proportion of the ribs on the positive electrode side in which the ribs on the negative electrode side that were located directly behind the ribs on the positive electrode side was 50%.

### (Reference Example 1)

A lead acid battery was produced in the same manner as in Example 1 except that in the separator with ribs on both surfaces in Example 1, the negative electrode side was a flat surface without ribs, and the rib height on the positive electrode side was 0.45 mm.

### (Comparative Example 1)

A lead acid battery was produced in the same manner as in Example 1 except that in the separator with ribs on both surfaces in Example 1, the rib height on the negative electrode side was 0.03 mm, and the rib height on the positive electrode side was 0.42 mm. The proportion of the ribs on the positive electrode side in which the ribs on the negative electrode side that were located directly behind the ribs on the positive electrode side was 50%.

### (Comparative Example 2)

A lead acid battery was produced in the same manner as in Example 8 except that in the separator with ribs on both surfaces in Example 8, at the time of providing the film material by molding the ribs having the prescribed shape integrally with the flat sheet by passing between the molding rolls, the locational relationship of the grooves between the molding roll on the positive electrode side and the molding roll on the negative electrode side was regulated to provide a structure in which the ribs on the negative electrode side were not located directly right behind the ribs on the positive electrode side as much as possible. The proportion of the ribs on the positive electrode side in which the ribs on the negative electrode side that were located directly behind the ribs on the positive electrode side was 12.5%.

The separators of Examples 1 to 11, Reference Example 1, and Comparative Examples 1 and 2 were evaluated in the following manners.

### <Spatial Distance on Application of 10 kPa>

The porous film was cut into a size of 10 mm in length × 115 mm in width to provide a test piece, which was held from both sides thereof with flat plates having the similar size, and a weight was placed on the flat plate to apply a pressure of 10 kPa. At this time, the number of the ribs on the positive electrode side was 8.

The separator was observed from the transverse cross sectional surface, and on the center line of the rib on the positive electrode side on the transverse cross sectional surface, the distance between the back web surface of the negative electrode side and the flat plate was measured for all the ribs, and the average value thereof was designated as the spatial distance.

The value obtained by dividing the number of the ribs on the positive electrode side that were located directly behind the ribs on the positive electrode side, i.e., that had the locational relationship where the 1/10 height location of the rib on the positive electrode side overlapped the 1/10 height location of the rib on the negative electrode side, by the total number of the ribs on the positive electrode side was designated as the proportion of the ribs on the negative electrode side that were located directly behind the ribs on the positive electrode side. The 1/10 height portions of the ribs on the positive electrode side and the negative electrode side each meant the width (i.e., the length in the width direction) of the rib at the 1/10 height (10% height) location of the rib height, which is defined by the back web surface and the top of the rib on the transverse cross sectional surface of the rib.

### <Electric Resistance>

The porous film was cut into a size of 70 mm × 70 mm to provide a test piece, which was measured with a test equipment according to SBA S0402.

### <Amount of Reductive Substance in terms of Converted Value as Consumed Amount of N/100 Potassium Permanganate>

The amount of the reductive substance contained in the separator in terms of the converted value as the consumed amount of an N/100 potassium permanganate was measured according to the method described in PTL 2.

By using the separators of Examples 1 to 11, Reference Example 1, and Comparative Examples 1 and 2, four test batteries were produced for each of the separators, and the test batteries each were measured for the battery internal resistance and the battery capacity after the first charge in the following manner. Two of the test batteries each were subjected to a light load lifetime test at 75°C, and measured for the corrosion in the welded part of the cell after the test. The remaining two of the test batteries were subjected to a penetration short circuit resistance test.

### <Battery Capacity>

The batteries were auxiliarily charged and then measured for the battery capacity in 5-hour time rate according to the capacity test in the section 9.5.2 of JIS D5301-2006, and the average value thereof was obtained.

### <75°C Light Load Lifetime Test>

The test battery was sunk in a water bath set at 75°C, and subjected to a test under the test condition defined in the section 9.5.5(a) of JIS D5301-2006.

For the accelerated evaluation for the lifetime in a high temperature atmosphere, the test was started in the state where the liquid level was located at the lowest liquid level line, and the replenishment of the liquid was performed once per one week based on the lowest liquid level line.

### <Penetration Short Circuit Resistance Test>

Discharge and charge were repeated by the following cycle, and the number of cycles at which penetration short circuit occurred was evaluated.
(1) Discharge: 6.4 A (final voltage: 10.5 V)
(2) Constant resistance discharge: 10 W resistance connected for 7 days
(3) Charge: 14.4 V, 50 A for 60 minutes

The steps (1) to (3) as one cycle were repeated, and the number of cycles at which fluctuation of the charge current and voltage occurred due to the occurrence of penetration short circuit was compared.

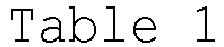

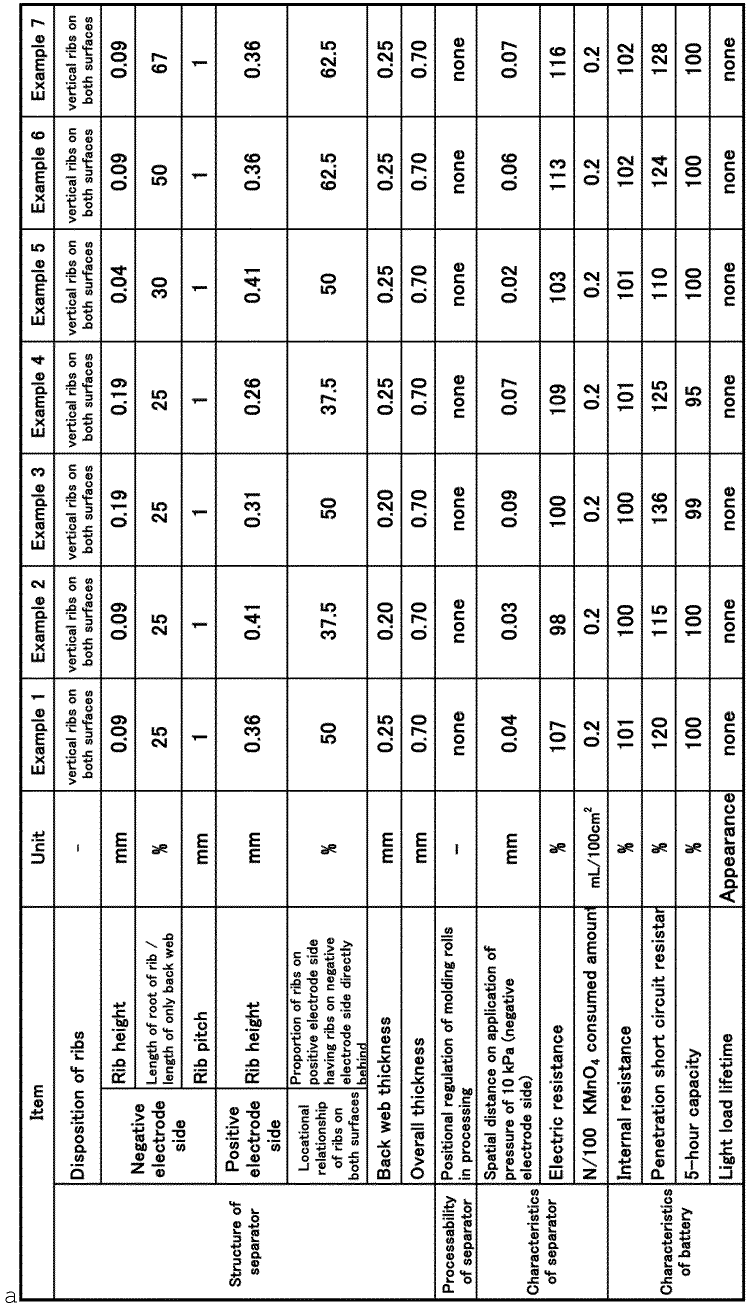

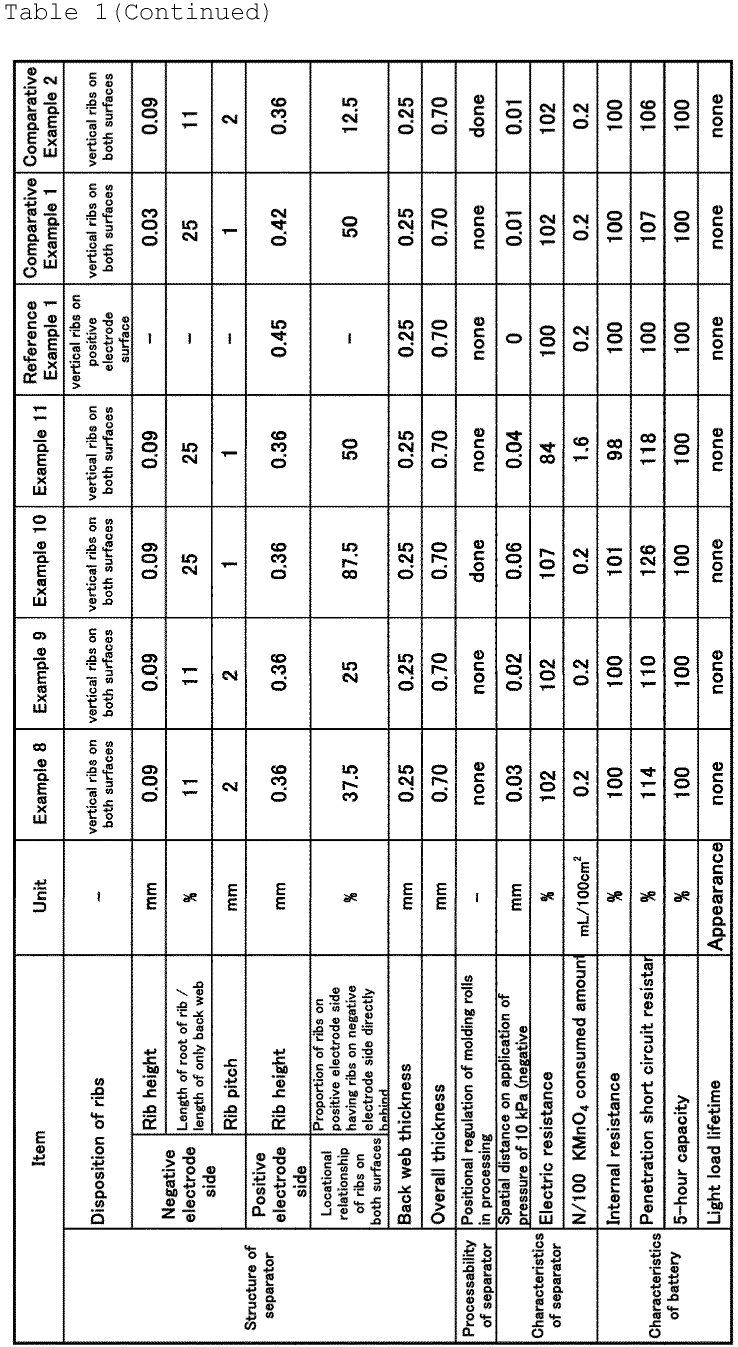

For the internal resistance as the battery characteristics, Reference Example was assumed to be 100, and 102 or less was judged as pass.

For the penetration short circuit resistance, Reference Example was assumed to be 100, and 110 or more was judged as improved.

For the 5-hour capacity, Reference Example was assumed to be 100, and 95 or more was judged as pass.

For the light load lifetime, the case where corrosion was observed after breaking down the battery was judged as "observed".

The following were found from Table 1.

It was confirmed that the separators of Examples 1 to 11 secured a space of 0.02 mm or more between the negative electrode back web surface and the flat plate on application of a pressure of 10 kPa with flat plates to the separator, due to the ribs on the negative electrode side thereof. Among these, in Examples 1, 3, 4, 6, 7, and 10 that secured a space of 0.04 mm or more between the negative electrode back web surface and the flat plate, the penetration short circuit resistance was improved by 20% or more as compared to Reference Example 1, as a result of the supply of sulfuric acid to the negative electrode side in discharging the battery, thereby suppressing the elution of lead sulfate.

In the separator of Example 2, the spatial distance between the back web of the negative electrode side and the flat plate was 0.03 mm, which was smaller than Example 1, since the proportion of the ribs on negative electrode side located directly behind the ribs on the positive electrode side was 37.5%, but the penetration short circuit resistance was improved by 15% as compared to Reference Example 1.

In Examples 3 and 4 having a rib height on negative electrode side of 0.19 mm, the battery capacity was decreased by decreasing the rib height on the positive electrode side, but a space of 0.07 mm or more was secured between the back web of the negative electrode side and the flat plate, and the penetration short circuit resistance was improved by 25% or more as compared to Reference Example 1.

In the separator of Example 5, the spatial distance between the back web of the negative electrode side and the flat plate was decreased to 0.02 mm on application of a pressure of 10 kPa with flat plates to the separator since the rib height on the negative electrode side was 0.04 mm, but the penetration short circuit resistance was improved by 10% as compared to Reference Example 1.

In the separators of Examples 6 and 7, the electric resistance of the separator was increased as compared to Reference Example 1 since the length of the root of the ribs on negative electrode side was 50% or 67% with respect to the length of only the back web surface, but a space of 0.05 mm or more was secured between the back web of the negative electrode side and the flat plate, and the penetration short circuit resistance was improved by 24% or more as compared to Reference Example 1.

In the separator of Examples 8 and 9, the spatial distance between the negative electrode side and the flat plate was 0.03 mm (in Example 8, the proportion of the ribs on positive electrode side in which the ribs on the negative electrode side that were located directly behind the ribs on the positive electrode side was 37.5%) or 0.02 mm (in Example 9, the proportion of the ribs on positive electrode side in which the ribs on the negative electrode side that were located directly behind the ribs on the positive electrode side was 25%) on application of a pressure of 10 kPa with flat plates to the separator since the rib pitch on the negative electrode side was increased, but the penetration short circuit resistance was improved by 10% or more as compared to Reference Example 1.

In the separator of Example 10, the proportion of the ribs on positive electrode side located having the ribs on negative electrode side directly behind the ribs on the positive electrode side was changed to 87.5% by the locational regulation of the molding rolls in processing. As a result, a space of 0.06 mm was secured between the back web of the negative electrode side and the flat plate, and the penetration short circuit resistance was improved by 26% or more as compared to Reference Example 1.

In the separator of Example 11, the amount of the reductive substance was 1.6 mL/100 cm² by increasing the amount of the surfactant mixed therein, and thereby an effect of decreasing the internal resistance was observed as compared to Reference Example 1. In the case where the amount of the surfactant mixed therein was further increased to increase the amount of the reductive substance to 2.0 mL/100 cm², corrosion was observed in breaking down the battery after the light load lifetime test, and the number of cycles in the 75°C light load lifetime test was decreased. It was found therefrom that the critical value for practically achieving the separator and the lead acid battery was 1.6 mL/100 cm².

In the separator of Comparative Example 1, only a space of 0.01 mm was secured between the back web of the negative electrode side and the flat plate on application of a pressure of 10 kPa with flat plates to the separator since the rib height on the negative electrode side was 0.03 mm, and the penetration short circuit resistance was improved only by 7% as compared to Reference Example 1.

In the separator of Comparative Example 2, the proportion of the ribs on positive electrode side located having the ribs on negative electrode side right behind the ribs on the positive electrode side was regulated to 12.5% by the locational regulation of the molding rolls in processing. As a result, only a space of 0.01 mm was secured between the back web of the negative electrode side and the flat plate, and the penetration short circuit resistance was improved only by 6% as compared to Reference Example 1.

### Industrial Applicability

T The separator for a lead acid battery according to one aspect of the invention can be applied to a control valve regulated type or flooded type of lead acid battery, and the lead acid battery according thereto can be favorably used as an electric power source for starting of vehicles and motorbikes.

### Reference Sign List

1: lead acid battery
2: negative electrode plate
3: positive electrode plate
4: separator
5: positive electrode platform
6: negative electrode platform
7: positive electrode column
8: penetrating connecting member
9: negative electrode column
11: electrode plate group
12: battery case
13: partition wall
14: cell
15: lid
16: negative terminal
17: positive terminal
18: vent plug
   (a) : length of root of linear ribs on negative electrode side
   (b) : length of only back web surface between linear ribs on negative electrode side
   (c): pitch of linear ribs on negative electrode side (pitch between the centers of length of root of linear ribs)
   (d) : center line of linear rib on positive electrode side
   (e): 1/10 height location of linear rib

## Claims

1. A separator for a lead acid battery, comprising a porous film containing a polyolefin resin and inorganic powder as major materials, having ribs disposed on both surfaces of the porous film;
having a locational relationship of the ribs on the both surfaces that is arbitrarily determined;
assuming that one of the both surfaces that has the ribs having a lower average height disposed thereon is facing a negative electrode side, having linear ribs in a vertical direction provided on the negative electrode side; and
on application of a pressure of 10 kPa to flat plates that sandwiched the porous film from both surfaces thereof, having a space of 0.02 mm or more between a back web surface of the negative electrode side and the flat plate surface.

2. The separator for a lead acid battery according to claim 1, wherein the length of a root of linear ribs on the negative electrode side have 67% or less with respect to a length of only the back web surface between the linear ribs on the negative electrode side, and the pitch of linear ribs on the negative electrode side have 2 mm or less.

3. The separator for a lead acid battery according to claim 1 or 2, wherein
assuming that one of the both surfaces that is opposite to the negative electrode side is a positive electrode side, the separator has linear ribs in a vertical direction provided on the positive electrode side, and
the linear ribs on the positive electrode side have a height of 0.26 mm or more.

4. The separator for a lead acid battery according to any one of claims 1 to 3, wherein the linear ribs on the negative electrode side have a height of 0.04 mm or more.

5. The separator for a lead acid battery according to claim 3 or 4, wherein 25% or more of the linear ribs on the positive electrode side have the linear ribs on the negative electrode side located directly behind the linear ribs on the positive electrode side at the negative electrode side.

6. The separator for a lead acid battery according to any one of claims 1 to 5, wherein the back web thickness except for a height of the ribs on the porous film has 0.15 mm or more and 0.25 mm or less, and the overall thickness including the ribs on the both surfaces on porous film has 1.0 mm or less.

7. The separator for a lead acid battery according to any one of claims 1 to 6, wherein the amount of any reductive substance originating from the surface active agent and liberated or eluted from the porous membrane as the separator into diluted sulfuric acid after 24 hours of electrolysis carried out at about 25°C with a direct current of 1.2 A by using an electrolytic cell composed of the porous membrane as the separator, a positive electrode, a negative electrode and the diluted sulfuric acid is 1.6 ml or less per 100 cm² when calculated from the consumption by titration of a 0.01N potassium permanganate solution per 100 cm² of the porous membrane.

8. A flooded lead acid battery comprising the separator according to any one of claims 1 to 7, the negative electrode side of the separator being used as a surface that faces a negative electrode plate of the battery.
